(19) Europäisches Patentamt
European Patent Office
Office européen des brevets

(11) **EP 1 625 646 B1**

(12) **EUROPEAN PATENT SPECIFICATION**

(45) Date of publication and mention
of the grant of the patent:
**07.12.2016 Bulletin 2016/49**

(51) Int Cl.:
***H02J 3/00*** (2006.01)

(21) Application number: **04732663.2**

(22) Date of filing: **13.05.2004**

(86) International application number:
**PCT/GB2004/002040**

(87) International publication number:
**WO 2004/102766 (25.11.2004 Gazette 2004/48)**

(54) **POWER DISTRIBUTION SYSTEM**

ENERGIEVERTEILUNGSSYSTEM

SYSTÈME DE DISTRIBUTION D'ÉNERGIE

(84) Designated Contracting States:
**AT BE BG CH CY CZ DE DK EE ES FI FR GR HU
IE IT LI LU MC NL PL PT RO SE SI SK TR**
Designated Extension States:
**LT LV**

(30) Priority: **13.05.2003 GB 0310997**

(43) Date of publication of application:
**15.02.2006 Bulletin 2006/07**

(73) Proprietor: **EC Power A/S
8382 Hinnerup (DK)**

(72) Inventors:
• **BOGNER, Bjarne
DK-8410 Rønde (DK)**
• **ABILDGAARD, Soren, Stig
DK-8250 Egå (DK)**
• **ANDERSEN, Jens-Otto, Ravn
DK-8000, Århus (DK)**

(74) Representative: **Taylor, Adam David et al
Dehns
St Bride's House
10 Salisbury Square
London EC4Y 8JD (GB)**

(56) References cited:
EP-A- 0 560 263    EP-A- 1 255 340
WO-A-01/71881    WO-A-03/084023
JP-A- 2002 044 870    JP-A- 2002 281 666
US-A1- 2002 103 745    US-A1- 2002 138 176

**Description**

The present invention relates to a power distribution system and in particular to such a system which is arranged to balance electricity generation and consumption whilst ensuring that electricity is generated in an efficient manner. It also relates to a local power distribution network for forming part of such a system and to a power-generating unit for forming part of such a network.

In the United Kingdom there are mainly large power stations with only a comparatively small amount of power being generated by lower output units such as windmills, small-scale combined heat and power units (CHP), etc. The power stations are connected to a national grid that enables power to be distributed throughout the country as required. Thus, to some extent it acts as a large reservoir of power, although it does not generally store energy (pump storage being a rare exception). In order to balance supply and demand, the amount of power supplied to the grid is controlled by the grid operators by selectively reducing output from, or shutting down, power stations.

In Denmark, by contrast, around 70 per cent of electricity is produced by the smaller scale producers. The overall arrangement can be described as a distributed system because of the geographical distribution of generating capacity. There are a large number of small CHP units and also wind turbines. The wind turbines produce power whenever the wind blows and there is no centralised control of the smaller generating units such as CHPs. So when Denmark produces more power than it needs it has to export the power, e.g. by means of a sub-sea cable to Norway, or the large power stations can be shut down. There is only limited control over the supply of power from CHPs and wind turbines to the grid. A few medium sized CHPs and large wind farms may be stopped centrally in case of an extreme situation.

It is thought that the Danish arrangement is likely to become more common in future as more power is generated by environmentally friendly means such as wind and wave power. It also favours potentially more efficient technologies such as small scale CHP. However, for such a system to operate with a good overall efficiency and to be cost effective, it is important that there be an effective mechanism of controlling the import and export of electricity to and from the grid. Such a system should result in the most cost effective energy production being used at a given time, rather than turning on and off those producers which are technically easiest to control.

EP 0297718 relates to combined heat and power systems, in particular to an arrangement where a number of these are connected to a centralised remote control arrangement. The control system is able to check gas prices and electricity prices in order to determine whether local generation is economically viable or whether it is preferable to import energy from the grid. It does not consider the control problems involved when exporting power to the grid from small distributed producers.

WO 03/007120 does concern local power producing units (LPPUs) arranged in groups that are connected to a grid. These groups may include a private grid comprising a number of LPPUs joined by a transmission bus and this private grid may be connected to a public grid. The system is centrally controlled with a network operating centre which decides where power is bought and sold being linked to each node (a node being one or more LPPUs plus local load and controllers).

US 6,255,805 concerns the local generation of electricity which may be sold to the grid. The system determines whether this should occur by considering fuel price, load, etc. Remote information may be used, but it does not address the issue of balancing an overall generating grid.

EP 1255340 discloses an electricity distribution network wherein nodes are controlled via a price setting apparatus. The nodes have a transmission unit and reception unit communicating with other nodes on the grid.

EP 0560263 discloses a control arrangement for electricity generating units, using a control dispatch centre and data from all the generators.

According to the invention there is provided a local electricity distribution network comprising a local transmission hub and plurality of units arranged to selectively import and export electricity from and to the hub, the hub in turn being arranged to selectively import and export electricity from and to an external grid, wherein each unit is arranged to determine whether to import or export electricity to or from the hub based only upon data communicated between it and the hub and the hub determines whether to import or export electricity from or to the external grid based only upon data communicated between it and the external grid.

Thus, by means of data communicated only between the units and the hub and the external grid and the hub, the electricity demand from and supply to the hub can be balanced.

The network may also comprise units that are capable only of importing or only of exporting electricity.

The hub may be one of a plurality of hubs connected to the grid so that the grid itself acts as a hub. Furthermore, the external grid may be one of a plurality of such grids that are connected in turn to a still further hub such that data may be communicated between each such grid and the further hub so that the further hub may determine whether to import or export electricity from or to each grid.

There may additionally be a data connection from the hub to a still higher power grid so that the further hub may determine whether to import or export electricity from or to the higher power grid.

It will be appreciated that this pattern may be repeated as many times as are desired so that an entire national or international electricity supply network is provided. Such a system can be balanced without a central controller communicating with each generating unit. Instead, data need only pass between each hub and the sources or supply and demand connected to it.

Thus, viewed from another aspect there is provided an electrical distribution network comprising a plurality of different power distribution sub-networks, each sub-network comprising an network and hence comprising a hub and a plurality of units acting as sources of electricity supply and/or demand in electrical and data connection thereto, wherein the sources for higher level networks include the hubs of other sub-networks at a lower level in the overall electrical distribution network, the electricity generation and consumption in the network being balanced by controlling the flow of electricity to and from each hub based only upon the data transmitted between the hubs and the units connected thereto.

It should be appreciated that the terms 'control', 'controlling' etc. as used herein with reference to the data communicated between the units/hub and hub/external network, does not imply that the individual units or hubs are centrally controlled but rather that they act autonomously based on the control data, such that the combined effect, of the components of the network interacting is to control the network

When applied to a power distribution network, for example that found in Denmark, local distribution systems (e.g. at 400V) connecting small-scale CHP units and non-generating consumers form one set of hubs. These may in turn be connected to a (for example IOkV) distribution network forming another hub. This may also have connected to it larger scale power producers such as large wind turbines, larger CHP units or fuel-burning power stations. There may be a number of such hubs that are in turn connected to a higher voltage (e.g. 60kV) hub, a number of these may be connected to a (e.g.) 150kV hub and if applicable a further (e.g.) 400kV hub may be provided. Additional generating capacity may be connected to each hub.

Thus, the invention may be applied to a pyramid-like or hierarchical network having a number of different levels, each corresponding to a particular distribution voltage. However, it is equally applicable to a network which contains only two levels - unit and hub. Thus, each hub may be connected only to other hubs. The entire system could operate at a common voltage if distances were short enough that transmission losses are not serious, but it is preferable that transmission between hubs be at a stepped-up voltage.

There may be a transmission cable and a separate data cable between each unit and its hub. Alternatively, data may be sent along the electricity transmission cable by means of suitable modulation. The data may also be sent by wireless link, via the Internet, etc.

Various different kinds of data may be used to control the system. It may include the amount of power demanded or offered. In order to enable the system to operate in an efficient manner, the data preferably also includes data related to the physical efficiency of power generation. This could be in terms of thermal efficiency and could factor-in energy losses, e.g. due to transmission, etc. In this way the hubs can preferentially obtain power from sources that operate at the highest efficiency, thereby reducing fuel consumption of the overall network. In the case of CHP, the effective improvement in efficiency derived from the use of the heat produced during generation may be factored-in when deriving the efficiency data.

Additionally or alternatively, the data may be based upon the economic cost of power generation. This is, of course, closely related to the physical efficiency, but is able to take into account other factors such as maintenance costs, etc. It is also a particularly convenient way to consider complex units such as CHP units where there are numerous variables.

In a simple arrangement, the data transmitted to the hub may therefore be (or relate to) a price per unit in appropriate units such as cents. The hub may then obtain power from the lowest price sources. Of course the cost may vary with production and so more than one price may be provided for different amounts of electricity. It follows that the highest cost (and therefore usually least efficient) units will only supply electricity to the hub when demand is greatest.

The units may transmit data indicating the amount of electricity they wish to import, or the hub can determine when there is incipient under- or over-capacity by monitoring voltage.

In a more sophisticated arrangement, the hub may determine buy and sell prices that are transmitted to the units connected to it. The individual units may then determine whether to buy electricity from the hub or to sell it to the hub. Thus, the data values relate to market prices not to costs of production; there may be significant variation due to changes in supply and demand.

There may also be associated metering equipment arranged to enable automatic payment (to and/or from the hub) based on those market prices. Preferably the units automatically determine the cost of production and determine whether it is favourable to buy or sell electricity or do neither.

With such an arrangement, the hub varies the buy and sell prices in order to match demand to supply. As demand increases, the prices at which the hub buys and sells electricity may be increased until demand falls and/or supply rises sufficiently to reach a balance. It is of no consequence whether this is achieved by increasing production from the local units or by increasing importation from an external hub.

The buy and sell prices can be the same, but preferably there is a differential (spread) to allow for losses, operating costs, profit, etc. The provision of such a spread also improves the stability of the system.

Although such a system can operate without data being transmitted from the units to the hub, this results in a system that has, in effect, only basic feedback control. It is therefore preferable that data is also transmitted from the units to the hub and it is particularly preferred that this data includes the units' buy and sell prices. This enables the system to operate with greater stability because the hub is provided with information about potential suppliers of power as well as the current suppliers. This means that the hub can operate as a stable feed-forward system.

Viewed from a still further aspect there is provided a local electricity distribution system comprising a hub connected to units that produce and/or consume electricity, the hub forming a market with the units whereby the hub repeatedly determines a buy price and a sell price for electricity, the prices being determined so as to balance the system, the units automatically determining on the basis of those prices whether to export electricity to the hub or to import it from the hub, this determination being based upon data communicated only between the unit and the hub.

The units may include CHP units. Preferably at least one of the units is a further hub.

The system of this aspect of the invention preferably further comprises some or all of the preferred features discussed above. Thus, for example, preferably the units' buy and sell prices are transmitted to the hub and these are used to assist in the control of the operation of the hub.

The invention also extends to a method of supplying electricity and/or balancing an electrical distribution network comprising the use of a system or apparatus as described above. It also extends to a method of operating a power generating unit, e.g. a CHP unit, connected to a hub in such a system whereby the unit derives price data as discussed above, transmits it to a hub and is controlled on the basis of said data.

Certain embodiments of the invention will now be described, by way of example only, with reference to the accompanying drawings:

Figure 1 is a schematic view of a national power generation network;
Figure 2 is a schematic diagram of a local market incorporated in such a power generation network according to the invention;
Figure 3 is a schematic diagram of a CHP unit connected to the power generation network;
Figure 4 shows a plot of fuel consumption and heat output versus electrical output for the CHP unit of the example; and
Figure 5 shows a plot of fuel consumption and heat output versus electrical output for a comparable gas powered CHP unit.

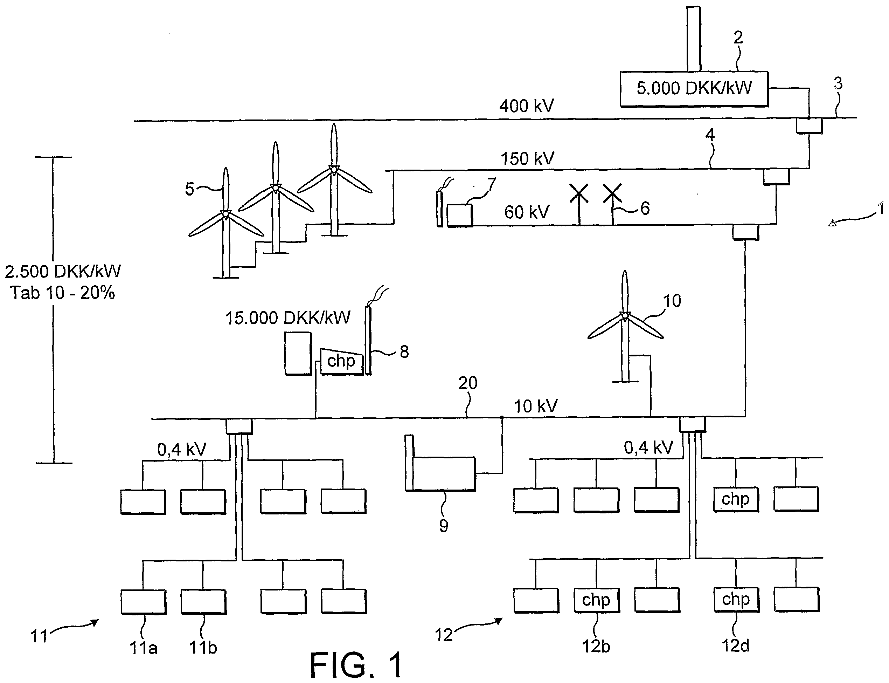

Figure 1 shows a power generation network 1 of the sort used in Denmark. This is significantly different from the networks found in some other countries where most generation capacity is provided by large power stations. The largest scale power-generation capacity is provided by one or more conventional power stations 2 which supply the order of thousands of megawatts into a 400 kilovolt network 3. This network is used to transmit the power over long distances. It is then transformed down to 150 kilovolts and fed to regional network 4. This network also has power generation capacity connected to it such as large offshore wind turbines 5.

The power from the 150 kilovolts network is then transformed down to 60 kilovolts where it is supplied to district networks. To this network there may be connected inland wind turbines 6 and large district combined heat and power units 7.

In order to distribute the power to various local areas it is then transformed down to 10 kilovolts to form medium voltage networks 20. Smaller-scale CHP units 8, and smaller inland windmills 10 may also feed power in to this part of the network. It is from this part of the network that large industrial buildings 9 are supplied and these may in some cases have the option of providing power to the network.

Local distribution networks 11 and 12, which operate at 400V are supplied from each medium voltage network 20 via transformers.

Local network 11 comprises a number of consumers 11a, 11b, etc. In local network 12 some of the consumers have their own power generating capacity. This includes combined heat and power units 12b and 12d.

It will be seen that in this system power is fed into the distribution network at all different levels. If there is excess power in the network then it may be exported from the 400 kilovolt level 3 by international sub-sea cables.

Conventionally, in order to balance supply and demand of power, generating capacity is selectively added to or removed from the system on instructions from a centralised controller.

The described embodiment of the invention controls and balances the power generation network illustrated in Figure 1 without such centralised control. Instead, individual subsections of the network communicate internally. These subsections in turn communicate with other subsections.

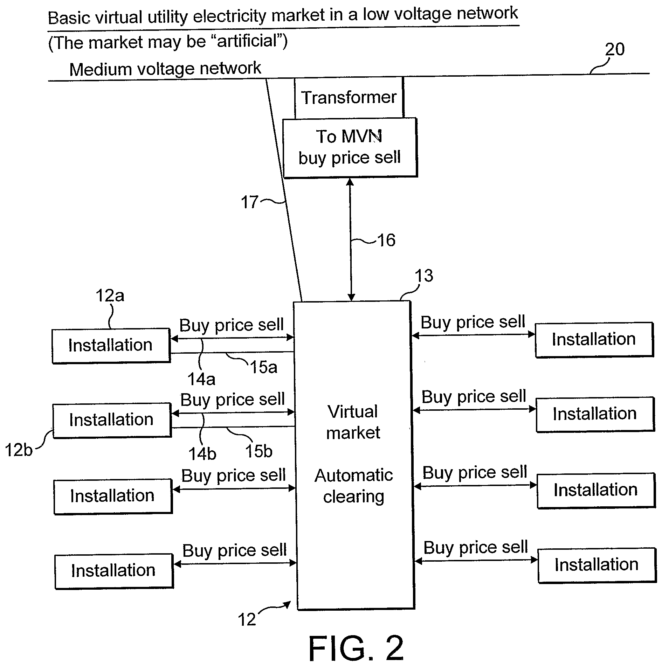

The embodiment of the invention will first be described with reference to local distribution network 12 which forms one such subsection. This is illustrated in more detail in Figure 2.

Local distribution network 12 provides power to a small town. It comprises a number of generation/consumption units 12a, 12b etc which are connected to local distribution hub 13 by means of power cables 15a, 15b etc. and data cables 14a 14b, etc. The individual units may take a number of different forms. For example, unit 12a is a group of houses that take electricity from the hub in the conventional manner. Unit 12b, however, is a combined heat and power unit that supplies energy to a small industrial unit. It is capable of generating sufficient power to supply the peak demand of the industrial unit. If desired, it can also supply electricity to the hub 13 or electricity can be imported from the hub 13.

The hub 13 is in turn connected to the medium voltage network 20 by means of power cable 17 and data cable 16.

Thus, the hub is able to communicate with the units 12a, 12b etc. and to import and export electricity from and to these units. In a directly analogous manner, the hub is able to communicate with the medium voltage network and also to import electricity from it and export electricity to it.

Units such as 12b, which are combined heat and power units (CHP), are capable of providing hot water for heating and also electricity. The nature of these units is that electricity is effectively a by-product of heat production. Thus, if a given amount of heat is required then a certain corresponding amount of electricity will also be generated. To enable there to be variation in electricity production within such a unit, whilst at the same time providing the desired degree of heating, one or more thermal stores may be provided in association with the unit. Additionally, a resistive load may be provided so that excess electricity may be used to heat water for the thermal store. The CHP unit is therefore capable of accommodating variations in electricity and heat demand.

However, it may not always be technically possible to produce sufficient heat or electricity from the CHP unit alone, or it may be uneconomic to do so for various reasons. Consequently, the CHP unit is able to import electricity from the hub 13. In addition, a conventional gas boiler may additionally be provided to provide an additional or alternative source of heat. Thus, electricity may be generated locally or imported and heat may be produced from the CHP system itself or from the gas boiler. If desired, other sources of electricity, such as fuel cells or solar panels may be connected to the unit.

Furthermore, as noted above, electricity may be exported from the unit to the hub. This may be done either because there is an excess of electricity being generated because of the amount of heat production required, or for economic reasons. Indeed, it is the intention of the design of this embodiment that significant amounts of power are exported from at least some of the various units to the hub and when appropriate from the hub to the medium voltage network from where it may be directly or indirectly supplied to other hubs.

It will be appreciated that each individual unit has a number of options as to how to provide heat and electricity and furthermore has the option of producing electricity for export. In addition, the amount of electricity produced by large-scale producers such as power station 2 may also be varied, although it is usual practice to maintain production from wind turbines 5 whenever possible.

As discussed above, the purpose of the invention is to enable electricity consumption and generation to be balanced whilst at the same time enabling electricity to be generated in the most cost-effective manner. This is achieved by enabling communication between each unit and its hub. If electricity can be imported into the hub more cost-effectively than it can be generated locally, then importation is facilitated.

This objective is achieved by creating a market within the hub 13. The hub establishes a price at which it will buy electricity from the individual units or from the medium voltage network and a price at which it will sell it back to them. The price differential between the two prices (spread) allows for transmission losses, system operating costs and operating profit. It is important to note that the hub communicates with the medium voltage network as if it were simply another unit. The buy and sell prices are transmitted via data cables 15a etc. to the units 12a, 12b, etc. and the medium voltage network 20.

Each individual unit also determines a buy price and sell price. When a unit has a buy price which is higher than the sell price broadcast from the hub then it will import electricity. When it has a sell price that is higher than the buy price of the hub then it will export electricity. The same relationship applies between the hub and the medium voltage network. If neither condition applies the unit generates its own power only. Thus, there will be a range of prices at which the unit will produce electricity for its own consumption. Likewise, there will be a range of prices where the hub does not import or export electricity from/to the medium voltage network. These ranges also provide stability to the system.

The prices are communicated to the hub via data cables 15a etc, together with the amount of power required or offered. This enables the system to operate with greater stability because the hub is provided with information about potential suppliers of power as well as the current suppliers. This means that the hub can operate as a stable feed-forward system rather than a basic feedback system.

The prices set by the hub vary automatically and dynamically. If there is an increase in demand for electricity from the hub that exceeds the supply to it then the buy and sell prices will both increase until the balance is re-established. It will be appreciated that increasing the sell price will reduce the number of units that will seek to import electricity because some or all of them will determine that it is more cost-effective to generate their own power. At the same time, the increase in the buy price will result in more units determining that it is desirable to export electricity to the hub. As well as simply starting and stopping the import and export of electricity, the units may vary the amount of power transmitted in either direction for the same reasons.

Thus, power generation is balanced with demand in a cost-effective manner by virtue of continuous real-time communication between each unit and the hub. The hub continuously monitors the demand and supply of electricity to and from it together with prices transmitted to it from the individual units and the medium voltage network. It dynamically adjusts prices that are broadcast to the units and the medium voltage network until balance is achieved.

Across the entire grid network each subsection acts in the same way as the hub previously described. Thus, each medium voltage network 20 (of which there may be many) acts as a single unit communicating with the hub formed by the 60 kilovolts grid. No data concerning individual units is transmitted beyond the local hub. Instead, each hub transmits a single set of data containing the above-mentioned price information to the larger-scale hub with which it communicates and in turn receives corresponding information from that larger-scale hub.

This principle is applied across the grid both horizontally (i.e. to all units connected to a given level in the distribution chain) and vertically up to a hub formed by the 400 kilovolts network.

The fact that some units can only generate power, for example power station 2 and some can only consume it, for example unit 12a, does not require any modification to the system. These units simply offer to buy or sell zero capacity.

Having described the overall operation of the distribution system, we now turn to the operation of an individual combined heat and power unit, such as unit 12b, connected to the system.

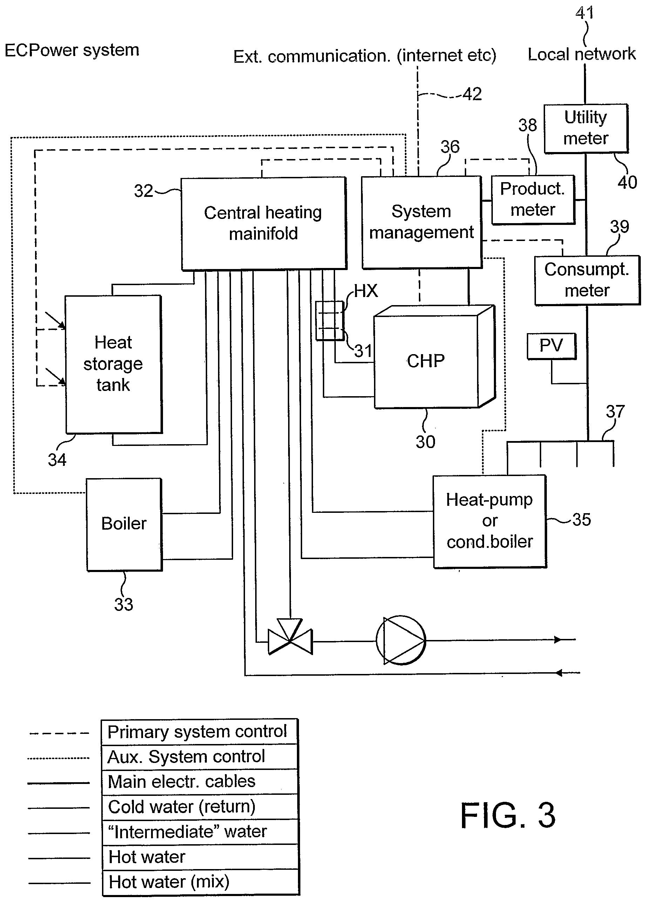

The main CHP device is an internal combustion engine driven generator, the coolant from which is circulated through a heat exchanger. This heats water that is in turn fed to the heating system and also to a heat storage unit. The generator is fuelled by natural gas and there is also a natural gas burning boiler that may supply hot water. The CHP unit is described in more detail with reference to Figure 3.

The CHP device 30 comprises an internal combustion engine driving an a/c generator. This is contained within a soundproofed housing. Coolant circulates around the engine in a conventional manner before passing out of the housing and being fed to a heat exchanger 31. The heat exchanger is used to heat water that is fed to the central heating manifold 32. In addition, gas fuelled boiler 33 also supplies hot water to the central heating manifold 32.

A heat storage tank 34 is also connected to the central heating manifold. When more heat is being produced than is required at a given time it can be stored by increasing the temperature of water contained in this tank. Further flexibility can be added to the system by the addition of a heat pump or a condensing boiler at 35.

Electricity produced from the CHP device 30 can be supplied directly to the local load 37 via production meter 38 and consumption meter 39. The local load may include a heat pump to convert excess electricity production into heat that may be stored. In addition, there is a connection via the production meter and utility meter 40 to cable 41 leading to the hub. This enables electricity to be exported from the unit to the hub. Cable 41 is also connected via utility meter 40 and consumption meter 39 to enable imported electricity to be fed to the local load 37.

As discussed above, heat can be selectively produced as desired from the CHP device 30 or from the boiler 33. Additionally, heat can be recovered from heat storage tank 34. Electricity can be generated by the CHP unit (and optionally exported) or it can be imported from the hub.

Connected to each of the components just described is the system management unit 36. This serves to determine what method of generation is to be used, whether power is to the imported or exported etc. It also controls a number of more specific operations of the system that are not relevant to the explanation of the present invention.

It is the function of the system management unit 36 to determine what mode of operation is appropriate, based upon technical and economic considerations. If there is a higher demand for electricity than can be provided by the CHP units alone then at least some power must be imported. However, in almost any other condition they will be a number of alternatives from which the unit can choose.

The system management unit 36 comprises a computer arranged to calculate what is the most cost-effective manner of heat or electricity production in a given set of circumstances and to determine buy and sell prices accordingly. It also has a data input/output port 42 which provides input data such as the current gas price and price data from the hub and enables the unit to transmit buy and sell prices to the hub.

In order to determine whether electricity should be imported or exported, the unit determines the current cost of production. This depends not only on the fuel price, but also on the heat output from the CHP unit because the efficiency of the generating system varies with load and because the value of the heat produced must be factored-in to the calculation. An hourly running cost based upon maintenance costs, etc. can also be factored-in.

The electricity production cost is then compared to the buy and sell prices available from the hub. If the production cost is higher than the sell price then the system management unit 36 will transmit data along link 42 to the hub requesting the desired amount of electricity at that sell price. On the other hand, if the electricity production price is lower than the buy price offered, the system management unit 36 will cause additional power to be generated, up to the maximum capacity of the system, and export this to the hub.

As discussed above, the hub continuously monitors the balance of electricity import and export from/to the hub and if necessary adjusts prices in real time. The system management unit 36 therefore continually monitors these prices and continuously updates the above calculations and changes the operation of the system as necessary in response to this.

Each of the other electricity production units performs similar calculations and so it will be seen that at the hub level electricity is produced in the most efficient, i.e. cost-effective, manner. Since this approach is followed horizontally and vertically across the entire distribution network it will be seen that the entire system generates electricity cost-effectively. Although these calculations are carried out throughout system down to the lowest level there is no central control of the network. It is necessary only for each unit to communicate with its local hub and so on throughout the system.

Examples of the type of calculations made by system management unit 36 will now be described based upon a CHP unit fueled by diesel.

The idle fuel consumption in kW (Tf), indicated efficiency base (BI) and factor indic. (FI) are known constants.

The immediate electricity output (Pe) is first used to calculate the corresponding indicated efficiency (IV) :

$$(IV) = (BI) - (Pe) \times (FI)$$

Immediate fuel consumption in kW (IE) is then calculated:

$$(IE) = (Tf) + (Pe/IV)$$

For a typical CHP unit, (Tf)=10kW, (BI)=0.565, (FI)=0.0078, (Pe)=12kW

$$(IV)=0.565-(12 \times 0.0078)=0.4714$$

$$(IE)=10+(12/0.4714)=35.45kW \text{ (or } 3.55 \text{ l/h)}$$

Heat output is derived from fuel consumption and electrical output using the following constants: heat efficiency idle (VT), factor heat (FV) and loss (Ta). The values of these for the same apparatus are 0.75, 1.2 and 0.5 respectively.

Heat output (Qv) is then found from:

$$(Qv) = (VT) \times (IE) - \{(Pe) \times (IV) \times (FV)\} - (Ta)$$

So in the example:

$$(Qv) = 0.75 \times 33.45-(12 \times 0.4714 \times 1.2)-0.5=19.3kW$$

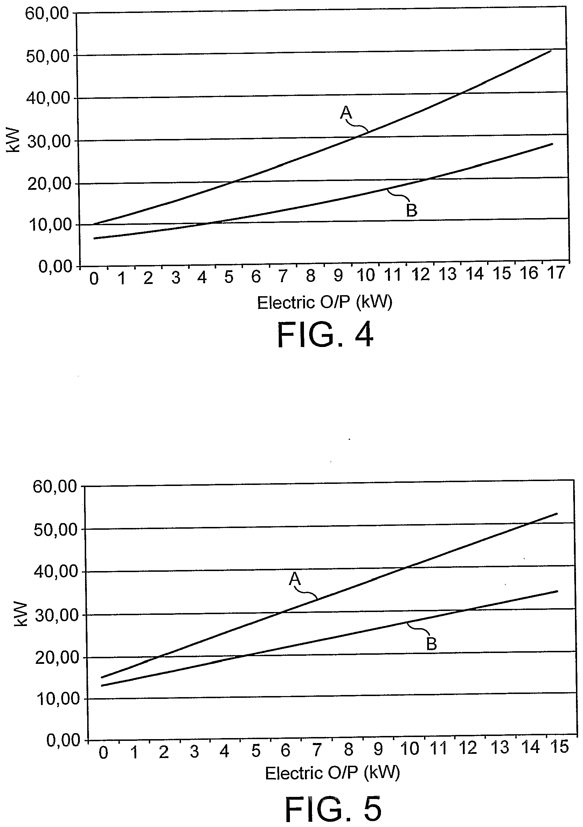

Thus, fuel consumption and heat output are turned into simple functions of electrical output. Figure 4 shows a plot of this for the CHP unit of the example. Line A is fuel consumption and line B is heat output.

The same process can be applied to a natural gas fueled CHP unit and Figure 5 shows a corresponding plot for such a unit.

If it is desired to change the way the units operate, this can be achieved simply. For example, if nitrous oxide emissions have to be reduced (at the expense of efficiency) then new values of (BI) and (FI) would be used to take into account changes such as the inevitable increase in heat output.

Cost per hour is then calculated by applying the fuel price (in cents per kWh) and a maintenance cost based on a cost in cents per hour of operation plus a component in cents per kWh of electricity produced.

Thus, for the diesel example,

$$\text{Fuel cost} = 3 \text{ cents/kWh} \times IE$$

$$\text{Maintenance} = 25 \text{ c/h} + 0.5 \text{ c/kWHel} \times (PE)$$

The net cost will be calculated by subtracting from the cost of heat production the value of electricity produced, based on a value (purchase price) of 10c/kWh:

$$Value\ of\ electricity = 10c\ x\ (Pe)$$

The total cost per hour including the value of the electricity produced is found by:

$$Total\ Cost/h = 3c/kWh\ x\ (IE)\ +\ 25c\ +\ 0.5c/kWh$$
$$x\ (Pe)\ -\ (10c\ x\ (PE))$$

The system is connected to an electrical network and so it operates under conditions where electricity can be produced if desired, but heat consumption must be covered. The total cost per hour may be divided by heat production to establish a unit price for CHP heat that is comparable to heat prices from alternative sources and which forms an expression of total system economy:

$$Heating\ price = (Total\ Cost/h)\ /\ (Qv)$$

This price is used in the control of the system. Based on this, the unit sets its buy and sell prices to ensure that electricity is only imported either when sufficient cannot be generated by the unit or when it is cost effective to do so. In the former case, the buy price must be raised to the sell price set by the hub. In the latter case whether electricity is imported depends on the hub's selling price. Similar considerations apply when determining whether to export electricity.

## Claims

1. A local electricity distribution network (11,12) comprising a local transmission hub (13) and plurality of units (11a, 11b, 12a, 12b) arranged to selectively import and export electricity from and to the hub, the hub in turn being arranged to selectively import and export electricity from and to an external grid (20), **characterised in that** each unit is arranged to determine whether to import or export electricity to or from the hub based only upon data communicated between it and the hub and the hub determines whether to import or export electricity from or to the external grid based only upon data communicated between it and the external grid.

2. A local electricity distribution network (1, 11, 12) as claimed in claim 1, wherein the hub (13) is one of a plurality of hubs connected to the external grid (20) so that the external grid itself acts as a further hub.

3. A local electricity distribution network (1,11,12) as claimed in claim 2, wherein the external grid (20) is one of a plurality of such external grids acting as further hubs that are connected in turn to a still further hub such that data may be communicated between each such external grid and the still further hub so that the still further hub may determine whether to import or export electricity from or to each external grid.

4. An electrical distribution network (1) comprising a plurality of different power distribution sub-networks (3,4,20), each sub-network comprising an network as claimed in claim 1 and hence comprising a hub and a plurality of units acting as sources of electricity supply and/or demand in electrical and data connection thereto, wherein the sources for higher level networks include the hubs of other sub-networks at a lower level in the overall electrical distribution network, the electricity generation and consumption in the network being balanced by controlling the flow of electricity to and from each hub based only upon the data transmitted between the hubs and the units connected thereto.

5. An electricity distribution network (1) as claimed in any preceding claim, wherein a transmission cable (15a,15b) and a separate data cable (14a, 14b) are provided between each unit (12a,12b) and its hub (13).

6. An electricity distribution network (1) as claimed in any preceding claim, wherein the hub (13) is arranged to determine buy and sell prices and said prices are transmitted to the units (12a, 12b) connected thereto.

7. An electricity distribution network (1) as claimed in any preceding claim, wherein the units (12a, 12b) automatically determine the cost of production and determine whether it is favourable to buy or sell electricity.

8. An electricity distribution network (1) as claimed in claim 7, wherein the units (12a, 12b) transmit cost information to the hub (13) connected to the units.

9. An electricity distribution network (1) as claimed in claim 8, wherein the hub (13) uses said cost information to assist in controlling the network (1, 11, 12).

10. An electricity distribution network (1) as claimed in any preceding claim wherein the units (12a, 12b) comprise combined heat and power units.

11. A local electricity distribution network as claimed in claim 1, whereas the hub forms a market with the units whereby the hub repeatedly determines a buy price and a sell price for electricity, the prices being determined so as to balance the system, the units automatically determining on the basis of those prices whether to export electricity to the hub or to import it from the hub, this determination being based only upon the data communicated between the unit and the hub.

12. A method of supplying electricity and/or balancing an electrical distribution network (1) comprising the use of a system or apparatus as claimed in any preceding claim.

**Patentansprüche**

1. Lokales Elektrizitätsverteilungsnetzwerk (11, 12) mit einem lokalen Übertragungszentrum (13) und einer Mehrzahl von Einheiten (11a, 11b, 12a, 12b), die dazu eingerichtet sind, um wahlweise Elektrizität von oder zu dem Zentrum zu importieren und zu exportieren, wobei umgekehrt das Zentrum dazu eingerichtet ist, um wahlweise Elektrizität von und zu einem externen Netz (20) zu importieren und zu exportieren, **dadurch gekennzeichnet, dass** jede Einheit dazu eingerichtet ist, um festzustellen, ob Elektrizität zu oder von dem Zentrum importiert und exportiert werden soll basierend auf Daten, die zwischen ihr und dem Zentrum kommuniziert werden, und wobei das Zentrum feststellt, ob Elektrizität von oder zu dem externen Netz importiert und exportiert werden soll, alleine basierend auf Daten, die zwischen ihm und dem externen Netz kommuniziert werden.

2. Lokales Elektrizitätsverteilungsnetzwerk (1, 11, 12) nach Anspruch 1, wobei das Zentrum (13) eines von einer Mehrzahl von Zentren ist, die mit dem externen Netz (20) verbunden sind, so dass das externe Netz selbst als ein weiteres Zentrum agiert.

3. Lokales Elektrizitätsverteilungsnetzwerk (1, 11, 12) nach Anspruch 2, wobei das externe Netz (20) eines von einer Mehrzahl von solchen externen als weitere Zentren dienenden Netzen ist, die ihrerseits mit noch einem weiteren Zentrum verbunden sind, so dass Daten zwischen jedem der externen Netze und dem weiteren Zentrum kommuniziert werden können, so dass das noch weitere Zentrum feststellen kann, ob Elektrizität von oder zu jedem externen Netz importiert oder exportiert werden soll.

4. Elektrisches Verteilungsnetzwerk (1) mit einer Mehrzahl von unterschiedlichen Energieverteilungsunternetzwerken (3, 4,20), wobei jedes Unternetzwerke ein Netzwerk wie in Anspruch 1 beansprucht aufweist und somit ein Zentrum und eine Mehrzahl von Einheiten umfasst, die als Quellen für Elektrizitätsversorgung und/oder Nachfrage nach elektrischer und datenmäßiger Verbindung dazu dienen, wobei die Quellen für Netzwerke höherer Stufe Zentren von anderen Unternetzwerken niedrigerer Stufe in dem gesamten elektrischen Verteilungsnetzwerk enthalten, wobei die Elektrizitätserzeugung und -verbrauch in dem Netzwerk ausgeglichen wird, indem der Fluss von Elektrizität zu und von jedem Zentrum alleine basierend auf den zwischen den Zentren und den damit verbundenen Einheiten übertragenen Daten geregelt wird.

5. Elektrizitätsverteilungsnetzwerk (1) nach einem der vorstehenden Ansprüche, wobei ein Übertragungskabel (15a, 15b) und ein getrenntes Datenkabel (14a, 14b) zwischen jeder Einheit (12a, 12b) und deren Zentrum (13) vorgesehen sind.

6. Elektrizitätsverteilungsnetzwerk (1) nach einem der vorstehenden Ansprüche, wobei das Zentrum (13) dazu eingerichtet ist, um Einkaufs- und Verkaufspreise festzustellen, und wobei die Preise an die damit verbundenen Einheiten (12a, 12b) übertragen werden.

7. Elektrizitätsverteilungsnetzwerk (1) nach einem der vorstehenden Ansprüche, wobei die Einheiten (12a, 12b) automatisch die Produktionskosten feststellen und feststellen, ob es vorteilhaft ist, Elektrizität zu kaufen oder zu verkaufen.

**8.** Elektrizitätsverteilungsnetzwerk (1) nach Anspruch 7, wobei die Einheiten (12a, 12b) Kosteninformation an das Zentrum (13) übertragen, das mit den Einheiten verbunden ist.

**9.** Elektrizitätsverteilungsnetzwerk (1) nach Anspruch 8, wobei das Zentrum (13) die Kosteninformationen dazu benutzt, um dazu beizutragen das Netzwerk (1, 11, 12) zu steuern.

**10.** Elektrizitätsverteilungsnetzwerk (1) nach einem der vorstehenden Ansprüche, wobei die Einheiten (12a, 12b) Kraftwärmekopplungseinheiten umfassen.

**11.** Elektrizitätsverteilungsnetzwerk nach Anspruch 1, wobei das Zentrum einen Markt mit den Einheiten bildet, wodurch das Zentrum wiederholt einen Einkaufspreis und einen Verkaufspreis für Elektrizität feststellt, wobei die Preise festgestellt werden, um das System auszugleichen, wobei die Einheiten automatisch auf der Basis von diesen Preisen feststellen, ob sie Elektrizität zu dem Zentrum exportieren oder sie von dem Zentrum importieren, wobei diese Feststellung alleine auf den Daten basiert, die zwischen der Einheit und dem Zentrum kommuniziert werden.

**12.** Verfahren zum Liefern von Elektrizität und/oder Stabilisieren eines elektrischen Verteilungsnetzwerkes (1), welches die Verwendung eines Systems oder einer Vorrichtung, wie sie in einem der vorstehenden Ansprüche beansprucht ist, beinhaltet.

## Revendications

**1.** Réseau local de distribution d'électricité (11, 12) comprenant une plaque tournante locale de transmission (13) et une pluralité d'unités (11a, 11b, 12a, 12b) agencées de manière à sélectivement importer et exporter de l'électricité depuis et vers la plaque tournante, la plaque tournante de son côté étant agencée pour sélectivement importer et exporter de l'électricité depuis et vers un réseau externe (20), **caractérisé en ce que**
chaque unité est agencée pour déterminer s'il y a lieu d'importer ou d'exporter de l'électricité vers ou depuis la plaque tournante sur la base uniquement de données communiquées entre celle-ci et la plaque tournante et la plaque tournante détermine d'importer ou d'exporter de l'électricité depuis ou vers le réseau externe sur la base uniquement de données communiquées entre celle-ci et le réseau externe.

**2.** Réseau local de distribution d'électricité (1, 11, 12) selon la revendication 1, dans lequel la plaque tournante (13) est l'une d'une pluralité de plaques tournantes reliées au réseau externe (20) de sorte que le réseau externe lui-même agit en tant que plaque tournante supplémentaire.

**3.** Réseau local de distribution d'électricité (1, 11, 12) selon la revendication 2, dans lequel le réseau externe (20) est l'un d'une pluralité de tels réseaux externes agissant comme plaques tournantes supplémentaires qui sont reliés à leur tour à une autre plaque tournante supplémentaire de sorte que des données peuvent être communiquées entre chaque réseau externe de ce type et l'autre plaque tournante supplémentaire, de sorte que l'autre plaque tournante supplémentaire peut déterminer s'il y a lieu d'importer ou d'exporter de l'électricité depuis ou vers chaque réseau externe.

**4.** Réseau de distribution électrique (1) comprenant une pluralité de sous-réseaux de distribution d'énergie différents (3 ,4 ,20), chaque sous-réseau comprenant un réseau tel que revendiqué dans la revendication 1 et de ce fait comprenant une plaque tournante et une pluralité d'unités agissant comme sources d'approvisionnement d'électricité et/ou de demande de connexion électrique et de données avec elle, dans lequel les sources pour des réseaux de niveau supérieur comprennent les plaques tournantes d'autres sous-réseaux à un niveau inférieur dans tout le réseau de distribution électrique, la production et la consommation d'électricité dans le réseau étant équilibrée en contrôlant le flux d'électricité vers et depuis chaque plaque tournante sur la base uniquement des données transmises entre les plaques tournantes et les unités qui lui sont reliées.

**5.** Réseau de distribution d'électricité (1) selon l'une quelconque des revendications précédentes, dans lequel un câble de transmission (15a, 15b) et un câble de données séparé (14a, 14b) sont prévus entre chaque unité (12a, 12b) et sa plaque tournante (13).

**6.** Réseau de distribution d'électricité (1) selon l'une quelconque des revendications précédentes, dans lequel la plaque tournante (13) est agencée pour déterminer les prix de vente et d'achat et lesdits prix sont transmis aux unités (12a, 12b) qui lui sont reliées.

7. Réseau de distribution d'électricité (1) selon l'une quelconque des revendications précédentes, dans lequel les unités (12a, 12b) déterminent automatiquement le coût de production et détermine s'il est favorable d'acheter ou de vendre de l'électricité.

8. Réseau de distribution d'électricité (1) selon la revendication 7, dans lequel les unités (12a, 12b) transmettent des informations de coût à la plaque tournante (13) reliée aux unités.

9. Réseau de distribution d'électricité (1) selon la revendication 8, dans lequel la plaque tournante (13) utilise ladite information de coût pour aider à contrôler le réseau (1, 11, 12).

10. Réseau de distribution d'électricité (1) selon l'une quelconque des revendications précédentes, dans lequel les unités (12a, 12b) comprennent des unités combinées de chauffage et d'électricité.

11. Réseau local de distribution d'électricité selon la revendication 1, tandis que la plaque tournante forme un marché avec les unités selon lequel la plaque tournante détermine de façon répétée un prix d'achat et un prix de vente d'électricité, les prix étant déterminés de manière à équilibrer le système, les unités déterminant automatiquement sur la base de ces prix s'il y a lieu d'exporter de l'électricité vers la plaque tournante ou de l'importer depuis la plaque tournante, cette détermination étant basée uniquement sur les données communiquées entre l'unité et la plaque tournante.

12. Procédé d'alimentation en électricité et/ou d'équilibrage d'un réseau de distribution électrique (1) comprenant l'utilisation d'un système ou d'un appareil selon l'une quelconque des revendications précédentes.

FIG. 1

Basic virtual utility electricity market in a low voltage network

(The market may be "artificial")

Medium voltage network

20

Transformer

To MVN
buy price sell

17

16

13

12a

Installation

Buy price sell

14a    15a

Virtual
market

Automatic
clearing

Buy price sell

Installation

12b

Installation

Buy price sell

14b    15b

Buy price sell

Installation

Installation

Buy price sell

Buy price sell

Installation

Installation

Buy price sell

Buy price sell

Installation

12

**FIG. 2**

ECPower system      Ext. communication. (internet etc)    Local network

**FIG. 3**

| | |
|---|---|
| – – – – | Primary system control |
| ·············· | Aux. System control |
| ———— | Main electr. cables |
| ——— | Cold water (return) |
| ——— | "Intermediate" water |
| ——— | Hot water |
| ——— | Hot water (mix) |

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0297718 A
- WO 03007120 A
- US 6255805 B
- EP 1255340 A
- EP 0560263 A